Europäisches Patentamt

European Patent Office

Office européen des brevets

(19)

(11) Publication number: **0 117 219**

**A2**

(12) **EUROPEAN PATENT APPLICATION**

(21) Application number: **84630020.0**

(22) Date of filing: **15.02.84**

(51) Int. Cl.³: **F 02 M 59/44**
**F 02 M 59/48**

(30) Priority: **17.02.83 US 467561**

(43) Date of publication of application:
**29.08.84 Bulletin 84/35**

(84) Designated Contracting States:
**DE IT NL**

(71) Applicant: **AMBAC INDUSTRIES, INC.**
**5200 Auto Club Drive**
**Dearborn Michigan 48126(US)**

(72) Inventor: **Kimberley, John Arthur**
**68 Newgate Road**
**East Granby Connecticut 06026(US)**

(72) Inventor: **Cavanaugh, John Bernard**
**126 Woodmont Street**
**West Springfield Massachusetts 01089(US)**

(74) Representative: **Weydert, Robert et al,**
**Office Dennemeyer S.à.r.l. 21-25 Allée Scheffer P.O. Box 41**
**L-2010 Luxembourg(LU)**

(54) Arrangement for adjusting axial positioning of injection barrel in fuel injection pump.

(57) The fuel injection pump (10) comprises a pump housing (12), a plurality of unit pump (18) each mounted in a housing bore (14). Each unit pump (18) includes a substantially cylindrical injection barrel (20) having a head flange portion (31). A pair of wedge shims (70a, 70b) are installed between the head flange portion (31) of barrel (20) and an upper surface of pump housing (12). For adjusting the axial positioning of the injection barrel the wedge shims are adjustable with respect to one another in a direction normal to the vertical axis of the injection barrel (20).

./...

Croydon Printing Company Ltd.

EP 0 117 219 A2

FIG.2

## Description

Arrangement for Adjusting Axial
Positioning of Injection Barrel
in Fuel Injection Pump

### Technical Field

The present invention relates to an injection pump and more particularly to an improved arrangement for adjustably mounting one or more injection barrels in a diesel injection pump.

### Background Art

In diesel fuel injection pumps, and particularly in so-called in-line injection pumps in which a plurality of discrete pumping units are serially arranged in a pump housing, it is common to mount each unit pump within a respective bore formed in the pump housing. Typically each such unit pump contained within the total pump housing includes a respective injection barrel which in turn contains a pumping plunger operating in one end thereof and an outlet valve assembly controllably closing the outlet end thereof. Such pumping unit is mounted in a respective bore in the pump housing such that the pumping plunger may be actuated by a cam and otherwise controlled by a fuel rack, both of which are also housed within the fuel pump housing and serve to control the other pumping units also.

In such pumps, one (or more) control ports formed at an axial position in the sidewall of each injection barrel is (or are) closed by the pumping plunger or piston during its up stroke, to initiate pressurization of the fuel within the barrel. This moment of port-closing typically controls the timing of the beginning of the delivery of fuel to an injector, and thence to an engine.

Many injection pumps mount, or more specifically suspend, the injection barrel within the respective pump housing bore to minimize or eliminate compressive forces on the barrel. More specifically, the outside diameter of the injection barrel is typically somewhat smaller than that of the diameter of the bore within the pump housing into which it is to be inserted, and seals prevent leakage of fuel from the unit pump. Typically, the axial positioning of each injection barrel and thus its control ports, relative to the pump housing and thus the respective cam and pumping piston, is determined by one or more spacers, such as flat shims, positioned intermediate the top of the pump housing and a shoulder flange affixed to the injection barrel. Examples of this arrangement are disclosed and illustrated in U.S. Patent 3,759,637 to Vuaille and U.S. Patent 3,885,895 to Staudt et al. Adjustment of that axial positioning of the injection barrel has typically required the addition or removal of one or more flat adjusting shims or discs, with the resultant accuracy being limited by the thickness of the thinnest shim. Moreover, such adjustment may be cumbersome and time consuming, requiring careful selection of the shims.

Accordingly, it is a principal object of the present invention to provide an improved arrangement for adjusting the axial positioning of respective injection barrels in fuel injection pumps.

0117219

Included in this object is the provision of means permitting continuous-resolution axial adjustment of the injection barrel, even during operation.

It is another object of the invention to provide an improved shimming arrangement for adjustably positioning an injection barrel within a significant axial range with but a minimum of shims.

According to the invention there is provided an improved arrangement for establishing and adjusting the axial positioning of respective injection barrels with the housing of a fuel injection pump. Each injection barrel includes a head flange near its upper end for supported engagement, directly or indirectly, by the upper surface of the pump housing. One or more shims are positioned intermediate the barrel head flange and the upper surface of the pump housing to establish the axial positioning of the barrel and thus, the positioning of the control port in the barrel. At least one, preferably two, and possibly more of the shims include surfaces inclined relative to a plane perpendicular to the barrel axis. The shims are relatively displaceable, either by linear translation generally in a plane perpendicular to the axis of the injection barrel, or by rotation about that axis.

A pair of relatively movable, engaging surfaces, each inclined relative to a plane perpendicular to the axis of the injection barrel, are interposed for relative movement by translation, or possibly rotation, to continuously vary the axial spacing between the barrel head flange and the pump housing over a significant axial range.

While one of the inclined surfaces might be provided by the upper surface of the pump housing or by the under surface of the barrel head flange and the other by an adjustable shim, in a preferred arrangement both inclined surfaces are provided by opposed, complementary inclined surfaces on a respective pair of relatively translatable shims interposed between the pump housing and the barrel head flange.  The shims may also include an adjusting notch for facilitating relative adjusting displacement with a common tool.

Brief Description of the Drawings

        Fig. 1 is a perspective view of an in-line fuel injection pump, partly broken away to reveal a unit pump mounted within a bore formed in the housing of the fuel injection pump in accordance with the present invention;

        Fig. 2 is an enlarged front sectional view of a portion of the pump of Fig. 1 taken along lines 2-2 thereof, illustrating a fuel injection barrel mounted in a pump housing bore and being axially positioned in accordance with the invention;

        Fig. 3 is a view similar to that of Fig. 2, but having the fuel injection barrel removed to reveal the mounting bore; and

        Fig. 4 is an enlarged, exploded, perspective view of a pair of barrel-positioning, wedge shims in accordance with the invention.

Best Mode for Carrying Out the Invention

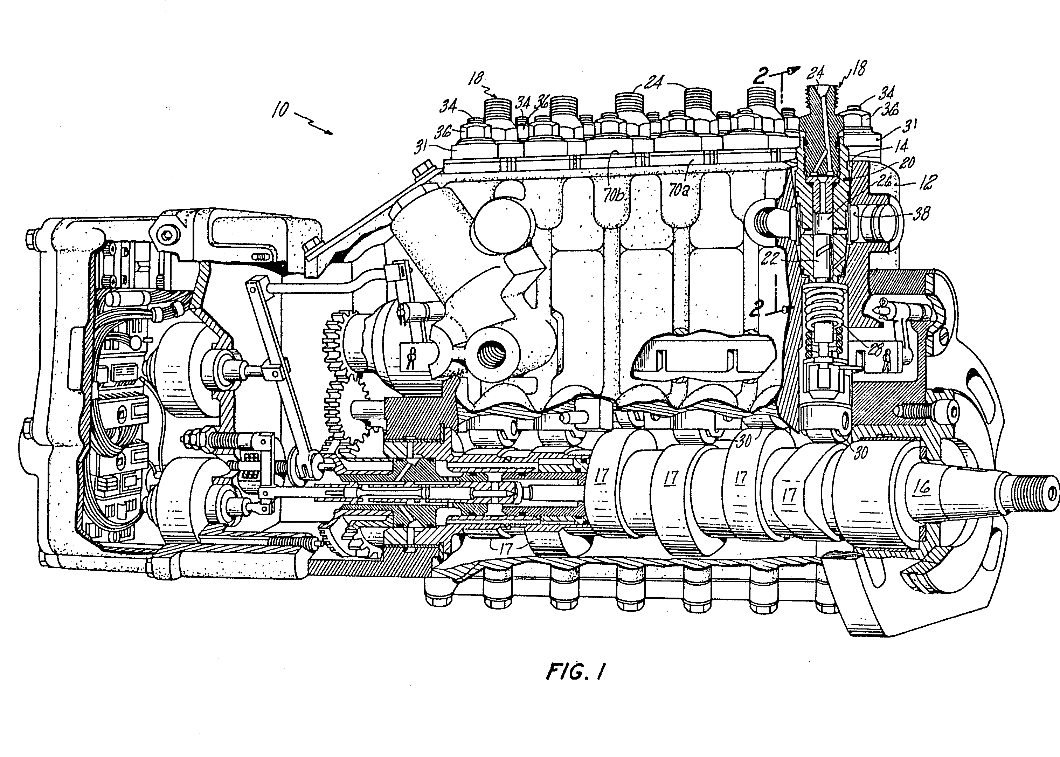

        Referring to Fig. 1, there is illustrated an in-line fuel injection pump, generally designated 10, for developing and delivering pressurized pulses of fuel to an internal combustion engine, such as a diesel. Fuel injection pump 10 includes a cast housing 12 into which are formed a series of mounting bores 14, only one of which being shown in Fig. 1. The mounting bores 14 are substantially vertically oriented, are parallel to one another and are arranged in in-line relationship. The bottom ends of the mounting bores 14 open into a front-to-rear extending cavity in which is mounted a cam shaft 16. The cam shaft 16 includes a respective cam 17 associated with each of the bores 14.

A so-called unit pump 18 is mounted in each of the housing bores 14. Each unit pump 18 includes a substantially cylindrical injection barrel 20 having a pumping piston 22 disposed for reciprocation in its lower or axially inner end and having an outlet valve assembly 24 installed in its upper or axially outer end. A pumping chamber 26 is defined within the injection barrel 20 between the pumping piston 22 and the outlet valve assembly 24. A compression spring 28 biases the pumping piston 22 downward into engagement with a cam follower 30 such that the axial displacement of the pumping piston 22 is controlled by the respective cam 17 associated therewith. The injection barrel 20 of each unit pump 18 includes a head flange portion 31 extending transversely thereof at its axially outer end. Each flange includes a pair of axial bores or slots 32 for registry with a corresponding pair of threaded openings 33 tapped into the upper surface of the pump housing 12 on either side of a mounting bore 14. Corresponding pairs of stud bolts 34 are threaded into the housing

- 6 -

0117219

openings 33 such that their upper ends may extend upwardly through the respective bores or slots 32 in the head flange 31 of a respective injection barrel 20. Respective nuts 36 then threadedly engage the upper ends of the stud bolts 34 to maintain the injection barrel 20, and thus the unit pump 18, in a mounted position within the bore 14 of pump housing 12.

The pump housing 12 is provided with a fuel gallery 38 containing fuel at a relatively low pressure for supply to the pump chamber 26. The control ports 40 through the wall of the injection barrel 20 provide communication between the pump chamber 26 and the fuel gallery 38. The unit pump 18 operates in a well known manner by admitting fuel to the pump chamber 26 through port 40 during the down stroke of pumping piston 22. Upon the upward stroke of the pumping piston 22, the ports 40 are closed and the fuel in pump chamber 26 is pressurized to a high pressure whereupon it is ejected through outlet valve assembly 24 for delivery via a fuel line to a fuel injector associated with the internal combustion engine. The high pressure within the pumping chamber 26 terminates when the pumping piston 22 is displaced upwardly to a position at which the upper edges of a pair of helical relief slots 48 disposed on the outer periphery of the pumping piston come into registry with the ports 40. A central bore (shown in dotted line) in the upper end of pumping piston 22 includes a radially extending lower arm which communicates with the relief slots 48 to provide the requisite relief path from the pumping chamber 26 through the piston 22 and to the ports 40. The outer periphery of the

- 7 -                                    0117219

injection barrel 20 may be somewhat reduced in the region of the ports 40 to allow the positioning thereover of a baffle sleeve 42 which includes relief ports 45 for preserving communication with the fuel gallery 38. The baffle sleeve 42 may be held in position by a snap ring 44 and serves to absorb the impact energy of the fuel pulse which is emitted at the end of the fuel delivery with high energy through the control port 40.

In accordance with the present invention, the injection barrel 20 includes an upper annular seat 50 in its external surface and a lower annular seat 52 also in its external surface. Annular seals 54 and 56 of a suitable resilient material are positioned in the seats 50, 52 respectively. The annular seal 54 is positioned axially above the pumping chamber 26 and the O-ring seal 56 is positioned axially below that pumping chamber from preventing leakage of the fuel beyond the region of the fuel gallery 38. In the region of the upper annular seal 54, the outside diameter of the fuel injection barrel 20 is somewhat greater than it is in the region containing the lower annular seal 56. Correspondingly, the outside diameter of the annular seal 54 in its uncompressed state is somewhat greater than that of the annular seal 56 in its uncompressed state.

Referring to the mounting bore 14 in pump housing 12, it is generally formed during the casting operation, with much of the wall surface being finished by a machining operation. While the lowermost portions of the mounting bore 14 which housed the cam follower 30 may be machined by bottom entry into the housing 12, that portion of the mounting bore housing most of the injection barrel 20 extends downwardly from the uppermost surface of the pump housing 12 and is machined from that upper surface. The mounting bore 14 of the present embodiment includes a respective chamfered surface for engaging each of the annular seals 56, 59 to effect the requisite fluid seal. More specifically, an axially inner, or lower, chamfer 66 is provided for engagement with lower annular seal 56, and an axially outer, or upper, chamfer 69 is provided for engagement with the upper annular seal 59. Both chamfers 66 and 69 are preferably of the same included angle, and that angle is relatively small. For instance, the included angle of chamfer 66 and 69 relative to the axis of bore 14 is less than about 20°, being about 14° in the illustrated embodiment.

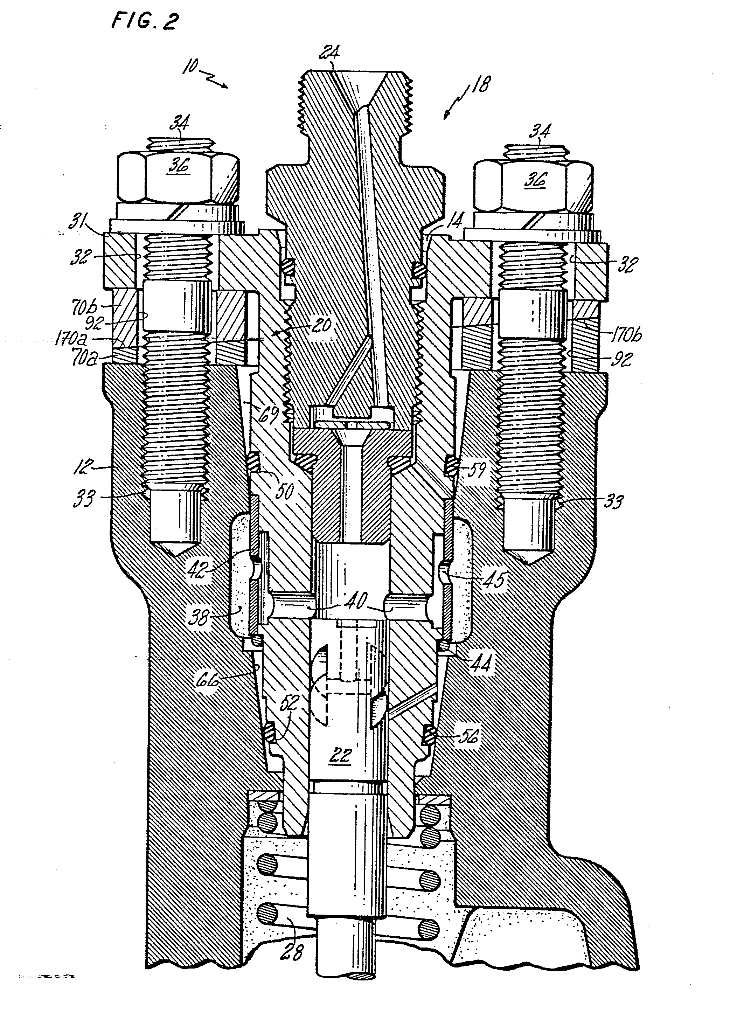

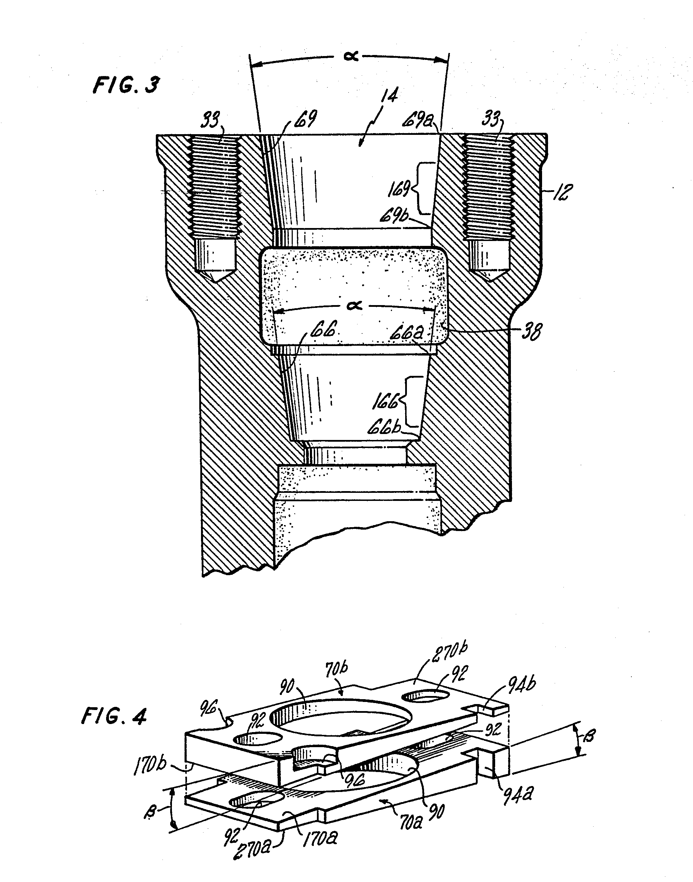

Referring to Figs. 2 and 3, it is known in the type of injection pump employing a suspended injection barrel to provide for establishing and/or adjusting the axial positioning of the barrel, as by inserting shims between the pump housing 12 and the injection barrel head flange 31. Such axial adjustment of the mounted position of injection barrel 20 serves in a known manner to adjust the instant or timing at which the pumping piston 22 closes control port 40 and thus begins pressurization and delivery of a fuel pulse to the engine. The mounted position of barrel 20 can typically be adjusted axially within a range, that range being represented by the bracketed zones 166 and 169 associated with the respective chamfers 66 and 69 of bore 14 which represent the respective regions of sealing engagement of the annular seals 56 and 59 with the housing 12. It will be noted that the upper and lower shoulder 69a and 69b of chamfer 69, and the upper and lower shoulder 66a and 66b of chamfer 66 are respectively beyond the axially upper and lower bounds of the zones 169 and 166 respectively such that the respective annular seals 69 and 66 are only positioned on the respective smooth chamfered surfaces in any permissible mounted position of the injection barrel.

Consistent with the aforementioned constraints, and to insure that the annular seals 66 and 69 are not shaved by contacting any shoulder or edge surface in bore 14 during insertion, axial adjustment or withdrawal of injection barrel 20, the diameter of bore 14 at lower shoulder 66b of chamfer 66 is less than that required for maximum radial compression of the annular seal 56 and the diameter at the upper shoulder 66a of that chamfer is greater than the uncompressed diameter of that annular seal. Similar geometrical constraints exist regarding the diameters of chamfer shoulders 60b and 69a relative to annular seal 59. It should also be noted that nowhere axially above chamfer 66 in bore 14 is the diameter of that bore as small as the outside diameter of lower annular seal 56 in its uncompressed state. A similar limitation applies to the region of bore 14 above chamfer 69 relative to the uncompressed outside diameter of annular seal 59, however in the illustrated embodiment that limitation is readily met by beginning the upper edge 69a of that chamfer at the upper surface of the pump housing 12.

In accordance with the present invention, and referring to Figs. 2, 3 and 4, the wedge shims 70a, 70b installed or inserted between the undersurface of the head flange 31 of a respective injection barrel 20 and the upper surface of pump housing 12 include a pair of opposed contacting surfaces 170a, 170b respectively, inclined relative to a plane perpendicular to the axis of barrel 20 and in a complementary manner to one another such that they are substantially parallel. Moreover, those shims 70a, 70b are movable relative to one another in a manner such that the exterior surfaces 270a and 270b of shims 70a and 70b respectively are moved relatively apart in a continuous manner in the axial direction. Specifically, the upper surface of housing 12 and the undersurface of each of the barrel head flanges 31 are typically flat and are oriented perpendicular to the normally-vertical axis of the injection barrels 20. Moreover, the reverse, or exterior, surfaces 270a and 270b of shims 70a and 70b respectively are flat and are intended for orientation parallel to, and typically in contact with, the upper surface of housing 12 and the undersurface of barrel head flange 31 respectively. Of course, other flat shims or similar intermediates might also appear between those surfaces.

The interior surfaces 170a and 170b of shims 70a and 70b respectively are inclined in a complementary manner to each other and at a predetermined angle β to their respective exterior surfaces 270a and 270b. In the illustrated embodiment the angle β is about 5°. It will be appreciated that if the shims 70a and 70b are relatively translated in the general direction in which their inclined surfaces 170a, 170b extend, which direction is also generally perpendicular to the axis of an injection barrel 20, the exterior surfaces 270a and 270b are moved axially relatively more apart or relatively more together, depending on which one of the two opposite directions they are moved.

Each shim 70a, 70b includes a respective central bore 90 extending axially therethrough for clearing the injection barrel 20 which extends therethrough. Each shim 70a, 70b also includes a respective pair of bores or slots 92 extending axially therethrough on opposite sides of bore 90 to clear the stud bolts 34 which extend upward from housing 12. More specifically, the slots 92 are spaced in the shims 70a, 70b in the direction in which their inclined surfaces 170a, 170b are inclined and further, are sufficiently dimensioned in that direction to afford the range of relative translational displacement desired. Obviously the central bore 90 in each shim should also be large enough to afford that displacement.

In the illustrated embodiment, bores or slots 92 are sufficiently sized in the direction radially of the axis of barrel 20 to allow radial displacement of each shim 70a, 70b of about ±1.5 mm from a neutral, centered position. Such range of displacement, combined with an incline angle of about 5°, affords a range of continuous axial adjustment of more than about 0.5 mm. This range is sufficient for finely tuning and balancing the delivery timing of each and all of the unit pumps 18.

To effect the adjustment, the nuts 36 on studs 34 are loosened slightly, and a tool such as a screw driver (not shown) is extended downwardly into the vertical slots 94a, 94b formed in the sidewalls of shims 70a, 70b respectively.  By then inclining the tool generally toward or away from the axis of barrel 20, the shims 70a, 70b are relatively displaced along their inclined surfaces 170a, 170b to relatively increase or decrease, respectively, the axial spacing of their exterior surfaces 270a, 270b.  The timing of fuel delivery may be monitored in a known manner, as by a needle-lift sensor, and the nuts 36 retightened when the desired timing is achieved. Although described herein as being manual, the adjusting function might be accomplished in an automated or semiautomated manner.

A pair of arcuate, counterbored seats 96 are formed in the upper surface 270b of the upper wedge shim 70b along the opposite sides near the corners of one end thereof for receiving portions of the heads of respective threaded locks (not shown). The locks are threaded into the pump housing 12 such that their heads engage and lock the wedge shims 70a, 70b in a selected position, thus allowing the nuts 36 to be loosened temporarily for making a rotational adjustment to the injection barrel 20.

Although the wedge shims 70a, 70b herein described are displaced relative to one another in a direction generally radially of the injection barrel 20, it will be understood that the respective inclined surfaces might take the form of complementary helices, as with screw threads, in which case the required relative displacement would be angular about the axis of the barrel.

It will also be appreciated that it would be possible to obtain the desired result of axial displacement by forming one of the inclined surfaces on the upper surface of housing 12 or on the undersurfaces of the respective barrel head flanges 31, with the remaining inclined surface being provided on a shim as described. Radial or angular displacement of that shim would then effect the desired axial displacement.

Although this invention has been shown and described with respect to detailed embodiments thereof, it will be understood by those skilled in the art that various changes in form and detail thereof may be made without departing from the spirit and scope of the claimed invention.

Having thus described a typical embodiment of the invention, that which is claimed as new and desired to be secured by Letters Patent of the United States is:

Claims

1.    In an injection pump assembly for an internal combustion engine, said assembly including a pump housing having at least one mounting bore extending thereinto from a surface thereof, and a respective injection barrel located at a mounted position in each said mounting bore for housing a respective pumping piston in one end thereof and a respective valve means in the other end thereof, each said injection barrel including at least one control port through the wall thereof, the closing of said injection barrel control port by a respective said piston being determined by the axial positioning of said injection barrel relative to said pump housing, each said injection barrel having a head flange affixed thereto and extending radially outward from said barrel, said axial positioning of a said injection barrel being predetermined by spacer means positioned axially intermediate said barrel head flange and an upper surface of said pump housing, the improvement wherein:

said spacer means comprises a shim having a first surface inclined relative to a plane perpendicular to the axis of said barrel and a second, generally reverse surface substantially perpendicular to said barrel, and including means defining a third surface inclined relative to a plane perpendicular to the axis of the barrel, said third surface engaging and being substantially complementary to said first surface, and said shim having said first surface being selectively displaceable relative to said third surface such that said shim second surface is displaced continuous in a direction axially of said injection barrel thereby to

- 15 -

0117219

adjust continuously said axial positioning of said injection barrel.

2. The injection pump assembly of Claim 1 wherein said shim having said first and second surfaces is a first shim and said means defining said third surface comprises a second shim, said second shim having a fourth surface generally reversed to said third surface and being substantially perpendicular to said barrel axis.

3. The injection pump assembly of Claim 2 wherein the upper surface of said pump housing and the undersurface of the respective barrel head flanges are substantially perpendicular to the axis of the barrel.

4. The injection pump assembly of Claim 3 wherein said first and said second shims are respective wedge shims, said relative displacement of said wedge shims comprising relative translation substantially in the direction in which their respective said first and third inclined surfaces extend.

5. The injection pump assembly of Claim 4 wherein the range of said displacement by said translation, and the angle at which said first and third surfaces are inclined to a plane perpendicular to the axis of a respective barrel, determine the adjustment range of said continuous axial positioning of said injection barrel by said wedge shims.

6. The injection pump assembly of Claim 5 wherein said axial adjustment range is at least about 0.5 mm.

7.    The injection pump assembly of Claim 3 wherein said first and said second shims each include a respective adjustment notch therein, said adjustment notches being so sized and relatively positioned to permit the insertion of an adjustment tool concurrently thereinto for effecting said relative displacement between said shims.

0117219

FIG. 1

FIG.2

0117219

FIG. 3

FIG. 4